# EUROPÄISCHE PATENTSCHRIFT

(11) **EP 0 731 618 B1**
(45) Veröffentlichungstag und Bekanntmachung des Hinweises auf die Patenterteilung: **22.01.2003**
(21) Anmeldenummer: 96102942.8
(22) Anmeldetag: 28.02.1996
(51) Int. Cl.: H04Q 3/02, H04Q 11/04, H04Q 3/60, H04L 29/06

(54) **Verfahren zum Steuern eines Zugangsnetzes sowie Vermittlungsstelle und Zugangsnetz damit**
Method for controlling an access-network and exchange with an access-network
Procédé pour commander un réseau d'accès et central avec un tel réseau d'accès

(30) Priorität: 08.03.1995 DE 19508081
(43) Veröffentlichungstag der Anmeldung: 11.09.1996
(73) Patentinhaber: ALCATEL, 75008 Paris (FR)
(72) Erfinder: Khakzar, Karim, Dr., 1933 Sterrebeek (BE)
(74) Vertreter: Knecht, Ulrich Karl, Dipl.-Ing.

(56) Entgegenhaltungen:
- WO-A-95/01019
- LOLISCHKIES J: "OPAL-ANSCHLUSSNETZE AN DIGITALEN TEILNEHMERVERMITTLUNGSSTELLEN" NTZ NACHRICHTENTECHNISCHE ZEITSCHRIFT , Bd. 46, Nr. 1, 1. Januar 1993 (1993-01-01), Seite 22-24,26-28 XP000335728 BERLIN, DE ISSN: 0027-707X
- KHAKZAR K: "V5 INTERFACES BETWEEN DIGITAL LOCAL EXCHANGES AND ACCESS NETWORKS" FREQUENZ,DE,SCHIELE UND SCHON GMBH., Bd. 48, Nr. 1/02, 1. Januar 1994 (1994-01-01), Seite 44-50 XP000439913 BERLIN, DE ISSN: 0016-1136

## Beschreibung

Die Erfindung betrifft ein Verfahren zum Steuern eines Zugangsnetzes nach dem Oberbegriff von Anspruch 1, eine Vermittlungsstelle nach dem Oberbegriff von Anspruch 8 und ein Zugangsnetz nach dem Oberbegriff von Anspruch 9.

Vor allem bei der Verwendung von optischer Nachrichtenübertragung im Teilnehmeranschlußbereich ist man bestrebt, Teilnehmer nicht direkt, sondern über ein konzentrierendes Zugangsnetz an eine Vermittlungstelle anzuschließen.

Die Erfindung geht nun von einem hierfür konzipierten Zugangsnetz aus, dessen prinzipieller Aufbau beispielsweise dem eines Zugangsnetzes entspricht, das über eine von ETSI spezifizierte V5.2 Schnittstelle mit einer Vermittlungsstelle verbunden ist. Deren Funktionsweise wird in der Spezifikation "pr ETS 300 347-1, Final Draft, Signalling Protocols and Switching, V5 interface for support of Access Network, Part 1 : V5.2 interface specification" vom April 1994 beschrieben.

Bei der V5.2 Schnittstelle ist ein Zugangsnetz über bis zu 16 physikalische Verbindungsleitungen mit einer Vermittlungsstelle verbunden. Das Zugangsnetz stellt hierbei die Teilnehmeranschlüsse bereit und die Vermittlungsstelle führt sämtliche vermittlungstechnischen und dienstrelevanten Aufgaben durch.

Für den Datenaustausch zwischen der Vermittlungsstelle und dem Zugangsnetz stehen eine Vielzahl von Übertragungskanälenund mehrere Steuerkanäle zur Verfügung. Über diese Steuerkanäle werden Nachrichten ausgetauscht, die der transparenten Übertragung der ISDN-Signalisierung (ISDN = Integrated Services Digital Network) für ISDN-Teilnehmeranschlüsse des Zugangsnetzes dienen oder die einem von fünf Protokollen zugeordnet sind, die der Steuerung des Zugangsnetzes durch die Vermittlungsstelle dienen. Diese Nachrichten sind jeweils mit einer protokollspezifischen Kennung versehen. Jedes der Protokolle erfüllt hierbei eine ganz bestimmte Aufgabe, beispielsweise die dynamische Zuteilung der Übertragungskanäle zu Teilnehmeranschlüssen, die Übertragung von PSTN-Signalisierungs-Informationen (PSTN = Public Switched Telephone Network), Sicherung der Steuerkanäle bei Ausfall von physikalischen Verbindungsleitungen oder die Steuerung der Betriebszustände der Teilnehmeranschlüsse. Mittels der so zur Verfügung stehenden Nachrichtensätze ist es möglich, alle wichtigen Funktionen des Zugangsnetzes von der Vermittlungsstelle aus auf einfache Weise zu steuern. Alle vermittlungstechnischen und dienstrelevanten Aufgaben verbleiben so in der Vermittlungsstelle und das Zugangsnetz ist unabhängig von der herstellerspezifischen Realisierung vermittlungstechnischer Funktionen.

Der Artikel "V5 interfaces between digital local exchanges and access networks" von K. Khakzar, Frequenz, De, Schiele und Schon GmbH, Bd 48, Nr 1/02 beschreibt die Struktur von V5 Schnittstellen sowie die verschiedenen von ETSI definierten Protokolle, die über die V5 Schnittstelle ablaufen. Das BCC (Bearer Channel Connection) Protokoll, das dazu dient, Nutzkanäle zu den verschiedenen Nutzdatenverbindungen dynamisch zuzuordnen, ist näher beschrieben.

Die Zahl der an das Zugangsnetz anschließbaren Teilnehmer ist durch die maximale Zahl von 16 physikalischen Verbindungsleitungen und dem mittleren Verkehrsaufkommen pro Teilnehmer begrenzt.

Der Erfindung liegt nun die Aufgabe zugrunde, die Anzahl der an ein Zugangsnetz obiger Konzeption anschließbaren Teilnehmer zu erhöhen.

Diese Aufgabe wird gelöst durch ein Verfahren nach der Lehre von Anspruch 1, durch eine Vermittlungsstelle nach der Lehre von Anspruch 8 und durch ein Zugangsnetz nach der Lehre von Anspruch 9.

Die Grundidee der Erfindung ist, in das Protokoll zum dynamischen Zuteilen von Übertragungskanälen einen zusätzlichen Satz von Nachrichten einzufügen, mittels dem der Auf- und Abbau von Internverbindungen im Zugangsnetz von der Vermittlungsstelle aus gesteuert wird. Dadurch bleiben die oben angeführten Vorteile eines herkömmlichen Zugangsnetzes gewahrt und je nach Anteil des Lokalverkehrs in einem Zugangsnetz, d.h. des Verkehrs zwischen Teilnehmern des selben Zugangsnetzes, wird die Zahl der an das Zugangsnetz anschließbaren Teilnehmer erhöht.

Vorteilhafte Ausgestaltungen der Erfindung sind den Unteransprüchen zu entnehmen.

Bei einem Anteil des Lokalverkehrs von beispielsweise 20% sind so durch die Erfindung in etwa 30% mehr Teilnehmer an dem Zugangsnetz anschließbar. Dadurch eignet sich ein solches erfindungsmäßiges Zugangsnetz der weiteren mögliche Verwendung gut für den Ersatz veralteter, analoger Vermittlungsstellen.

Weiter erwächst daraus der Vorteil, daß sich bei einem ausgelasteten Anschlußnetz die Gesamtkosten pro Teilnehmeranschluß entsprechend verringern. Im einzelnen werden die Kosten für das Zugangsnetz, für die Übertragungstechnik und für die Vermittlungsstelle verringert.

Ein weiterer Vorteil ist, daß durch die Erfindung bei gleicher Zahl der Teilnehmeranschlüsse unter Umständen eine geringere Zahl von Verbindungsleitungen zwischen Anschlußnetz und Vermittlungsstelle benötigt wird.

Im folgenden wird die Erfindung anhand eines Ausführungsbeispiels unter Zuhilfenahme der beiliegenden Zeichnungen weiter erläutert
- Fig. 1: zeigt ein Blockschaltbild eines erfindungsgemäßen Zugangsnetzes und einer erfindungsgemäßen Vermittlungsstelle.
- Fig. 2: zeigt eine symbolische Darstellung der Protokollarchitektur für den Nachrichtenaustausch zwischen dem erfindungsgemäßen Zugangsnetz nach Fig.1 und der erfindungsgemäßen Vermittlungsstelle nach Fig. 1.
- Fig. 3: zeigt eine Liste von Nachrichten für den Nachrichtenaustausch zwischen dem erfindungsgemäßen Zugangsnetz nach Fig. 1 und der erfindungsgemäßen Vermittlungsstelle nach Fig. 1.
- Fig. 4: zeigt ein Ablaufdiagramm eines Verbindungsaufbaus zwischen zwei an dem erfindungsgemäßen Zugangsnetz nach Fig. 1 angeschlossenen Teilnehmern.
- Fig. 5: zeigt ein Ablaufdiagramm einer Alternative zum Verbindungsaufbaus nach Fig. 4.

Im folgenden wird die Anwendung des erfindungsgemäßen Verfahrens zum Steuern eines Zugangsnetzes in einem Kommunikationssystem mit einem erfindungsgemäßen Zugangsnetz und einer erfindungsgemäßen Vermittlungsstelle aufgezeigt.

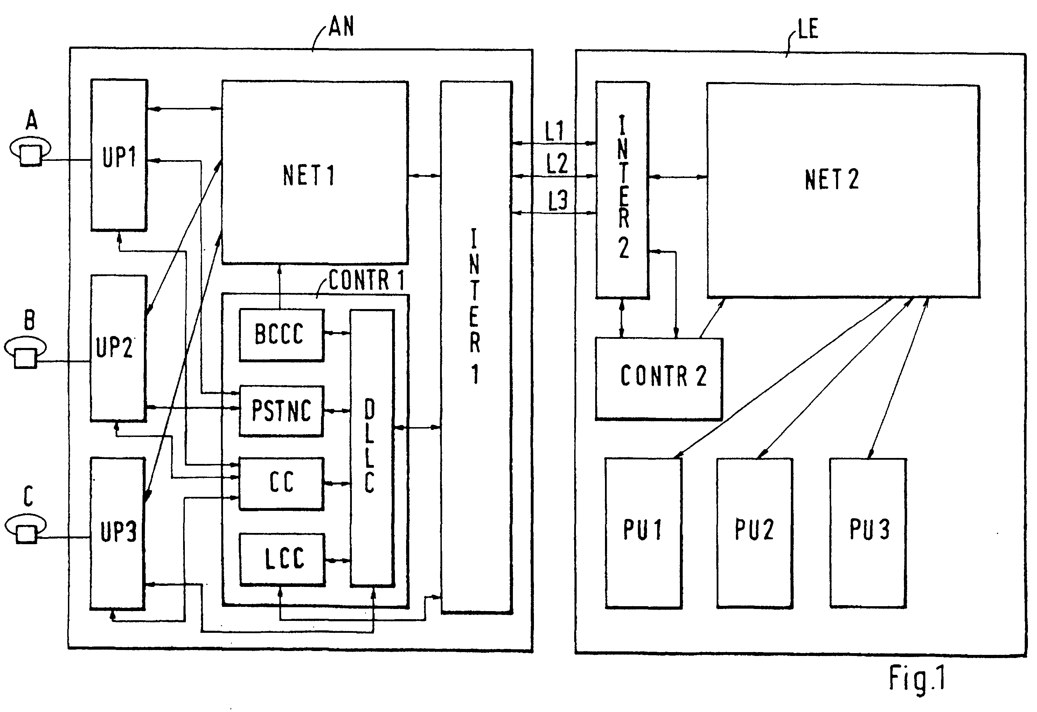

Fig. 1 zeigt ein Zugangsnetz AN, eine Vermittlungsstelle LE und drei Endgeräte A, B und C. Die drei Endgeräte A, B und C sind mit dem Zugangsnetz AN verbunden, das weiter über 3 physikalische Verbindungsleitungen L1 bis L3 mit der Vermittlungsstelle LE verbunden ist.

Die Verbindungsleitungen L1 bis L3 stellen 32 Übertragungskanäle je 64 Kilobit/sec zur Verfügung, von denen jeweils 0 bis 3 Kanäle als Steuerkanäle und der Rest als Nutzkanäle dienen. Insgesamt ist jedoch mindestens ein Steuerkanal notwendig. Die Anzahl der Verbindungsleitungen ist beispielhaft gewählt und kann je nach Bedarf erhöht oder erniedrigt werden.

Bei den Endgeräten A bis C handelt es sich um Fernsprech-Endgeräte, wobei es sich bei den Endgeräten A und B um analog Fernsprechgeräte und bei dem Endgerät C um ein ISDN-Fernsprechgerät handelt. Es ist aber auch möglich, sonstige Endgeräte, wie beispielsweise einen Computer für die Datenkommunikation oder eine Nebenstellenanlage anstelle der Endgeräte A bis C zu verwenden. Die Zahl der angeschlossenen Endgeräte ist hier beispielhaft gewählt.

Das Zugangsnetz AN ist im Allgemeinen von der Vermittlungsstelle LE räumlich abgesetzt und wird von dieser gesteuert. Es stellt die Teilnehmeranschluß-Einrichtungen für die Endgeräte A bis C bereit und führt zusammen mit der Vermittlungstelle LE den Verbindungungsaufbau und -abbau für die endgeräte A bis C durch.

Es ist auch möglich, daß es sich bei dem Zugangsnetz AN um ein logisches Zugangsnetz handelt. Mehrere solcher logischer Zugangsnetze würden sich dann die Hardware-Resourcen eines physikalischen Zugangsnetzes teilen.

Die Vermittlungsstelle LE steuert das Zugangsnetz AN und führt alle vermittlungstechnischen und dienstrelevanten Aufgaben für die Endgeräte A bis C des Zugangsnetzes AN durch.

Das Zugangsnetz AN weist drei Teilnehmeranschluß-Einrichtungen UP1, bis UP3, eine Schnittstelleneinrichtung INTER1, ein Koppelnetz NET1 und eine Steuereinrichtung CONTR1 auf.

Die Schnittstelleneinrichtung INTER1 tauscht Daten mit dem Koppelnetz NET1, mit der Steuereinrichtung CONTR1 und über die Verbindungsleitungen L1 bis L3 mit der Vermittlungsstelle LE aus. Die Teilnehmeranschluß-Einrichtungen UP1 bis UP3 sind mit den Endgeräten A, B bzw. C verbunden und tauschen Daten mit dem Koppelnetz NET1 aus. Die Steuereinrichtung CONTR1 tauscht Steuerund Zustandsdaten mit der Schnittstelleneinrichtungen INTER1 und den Teilnehmeranschluß-Einrichtungen UP1 bis UP3 aus und sendet Steuerdaten an das Koppelnetz NET1.

Die Schnittstelleneinrichtung INTER1 stellt die für die Datenübertragung über die Verbindungsleitungen L1 bis L3 notwendigen Grundübertragungsdienste bereit. Darüberhinaus stellt sie eine Verbindung der Nutzkanäle der Verbindungsleitungen L1 bis L3 mit dem Koppelnetz NET1 und der Steuerkanäle der Verbindungsleitungen L1 bis L3 mit der Steuereinrichtung CONTR1 bereit.

Die Teilnehmeranschluß-Einrichtungen UP1 bis UP3 stellen jeweils den Teilnehmeransch luß für die Endgeräte A bis C zur Verfügung und leiten den jeweiligen Nutzkanal an das Koppelnetz NET1 weiter.

Es ist auch möglich, daß die Teilnehmeranschlußeinrichtungen UP1 und UP2 einen höherratigeren Anschluß, beispielsweise einen 2 Mbit/sec Anschluß zur Verfügung stellen oder eine logische Schnittstelle zu einem Teilnehmer bereitstellen, die u.U. aus mehreren physikalischen Schnittstellen besteht.

Das Koppelnetz NET1 besitzt eine Matrix-Struktur und ist ähnlich einem Cross-connect aufgebaut. Mit ihm ist es möglich, die Nutzkanäle von den Teilnehmeranschluß-Einrichtungen UP1 bis UP3 untereinander oder mit einem der Nutzkanäle der Schnittstelleneinrichtung INTER1 zu verkoppeln. Das Durchschalten solcher Verbindungen durch das Koppelnetz NET1 wird von der Steuereinrichtung CONTR1 gesteuert.

Es ist auch möglich, daß das Koppelnetz NET1 eine andere Struktur hat, beispielsweise von einem Bus gebildet wird, auf den mit einem verteilten Zugriffsverfahren zugegriffen wird.

Weiter kann das Koppelnetz NET1 auch dazu verwendet werden, die Steuerkanäle der Verbindungsleitungen L1 bis L3 mit der Steuereinrichtung CONTR1 zu verbinden.

Die Steuereinrichtung CONTR1 empfängt Zustandsdaten von der Schnittstelleneinrichtung INTER1 und den Teilnehmeranschluß-Einrichtungen UP1 bis UP3 und steuert diese sowie das Koppelnetz NET1. Weiter tauscht sie über die Schnittstelleneinrichtung INTER1 Nachrichten mit der Vermittlungsstelle LE aus, mittels derer sie ihrerseit von der Vermittlungsstelle LE gesteuert wird. Die Steuereinrichtung CONTR1 steuert somit auf Anweisung von der Vermittlungsstelle LE den Verbindungsaufbau zwischen zwei der Endgeräte A bis C oder zwischen einem der Endgeräte A bis C und einem von der Vermittlungsstelle LE gewählten Nutzkanal der Verbindungsleitungen L1 bis L3.

Die Vermittlungsstelle LE weist eine Schnittstelleneinrichtung INTER2, ein Koppelnetz NET2, eine Steuereinrichtung CONTR2 und drei Einrichtungen PU1 bis PU3 auf.

Die Schnittstelleneinrichtung INTER2 tauscht Daten mit dem Koppelnetz NET2, mit der Steuereinrichtung CONTR2 und über die Verbindungsleitungen L1 bis L3 mit dem Zugangsnetz AN aus. Die Einrichtungen PU1 bis PU3 tauschen Daten mit dem Koppelnetz NET2 aus. Die Steuereinrichtungen CONTR2 tauscht Steuer- und Zustandsdaten mit der Schnittstelleneinrichtung INTER2 aus und sendet Steuerdaten an das Koppelnetz NET2.

Die Schnittstelleneinrichtung INTER2 stellt die Grund-Übertragungsdienste für die Verbindungsleitungen L1 bis L3 zur Verfügung. Darüberhinaus verbindet sie die Nutzkanäle der Verbindungsleitungen L1 bis L3 mit dem Koppelnetz NET2 und deren Steuer-Kanäle mit der Steuereinrichtung CONTR2.

Die Einrichtungen PU1 bis PU3 sind Anschlußeinrichtungen, beispielsweise Anschlußeinrichtungen für analoge oder digitale Teilnehmer, für Übertragungsleitungen zu anderen Vermittlungsstellen, für Takte und Töne oder für MFT-Signalisierung (MFT = Mehrfrequenzton). Die Zahl von drei Einrichtungen PU1 bis PU3 ist hier beispielhaft gewählt.

Das Koppelnetz NET2 ist ein übliches Koppelnetz für eine Vermittlungsstelle. Es stellt auf ein Steuersignal von der Steuereinrichtung CONTR2 Verbindungen zwischen Nutzkanälen der Verbindungsleitungen L1 bis L3 und zwischen solchen Nutzkanälen und den Einrichtungen PU1 bis PU3 zur Verfügung.

Der mögliche Aufbau des Koppelnetzes NET2 und der Einrichtungen PU1 bis PU3 kann beispielshaft dem Artikel "Hardware-Struktur", Seite 135 bis 147 der Zeitschrift "Elektrisches Nachrichtenwesen", Band 58, Nr. 2/3 1981 entnommen werden.

Die Steuereinrichtung CONTR2 steuert das Zugangsnetz AN und den Verbindungsaufbau für die Endgeräte A bis C des Zugangsnetzes AN. Hierfür tauscht sie über die Schnittstelleneinrichtungen INTER1 und INTER2 Nachrichten mit der Steuereinrichtug CONTR1 des Zugangsnetzes AN aus und nimmt so auf entscheidende Funktionen im Zugangsnetz AN Einfluß. Weiter steuert sie die Schnittstelleneinrichtung INTER2, die die Verbindungen zum Zugangsnetz AN bereitstellt, und veranlaßt den Aufbau entsprechender Verbindungen durch das Koppelnetz NET2.

Bei einem von einem Endgerät des Zugangsnetzes AN initierten Verbindungsaufbau werden so von der Vermittlungstelle LE und dem Zugangsnetz AN folgende Schritte durchgeführt:

Der Teilnehmer hebt ab. Dies wird der Vermittlungsstelle LE über Nachrichten auf den Steuerkanälen mitgeteilt. Von der Steuereinrichtung CONTR1 wird daraufhin auf Anweisung der Steuereinrichtung CONTR2 der Aufbau einer Verbindung zwischen dem Endgerät und der Vermittlungstelle LE über einen von dieser bestimmten Nutzkanal der Verbindungsleitungen L1 bis L3 veranlaßt. Die Wahliformationen vom Teilnehmer gelangen anschließend entweder über Nachrichten, z. B. beim Impulswahlverfahren, oder direkt in Form von Tönen über die Nutzkanäle, z. B. beim Mehrfrequenzwahlverfahren, zur Vermittlungstelle LE, von der sie sodann ausgewertet werden. Stellt diese fest, daß der gerufene Teilnehmer ebenfalls über das Zugangsnetz AN angeschlossen ist, so veranlaßt sie die Steuereinrichtung CONTR1 im weiteren Verlauf des Verbindungsaufbaus eine Internverbindung zwischen diesen Teilnehmern durch das Koppelnetz NET1 zu schalten und baut anschließend die Verbindung über den Nutzkanal der Übertragungsleitung ab. Ist dies nicht der Fall, so baut sie die angeforderte Verbindung über das Koppelnetz NET2 auf.

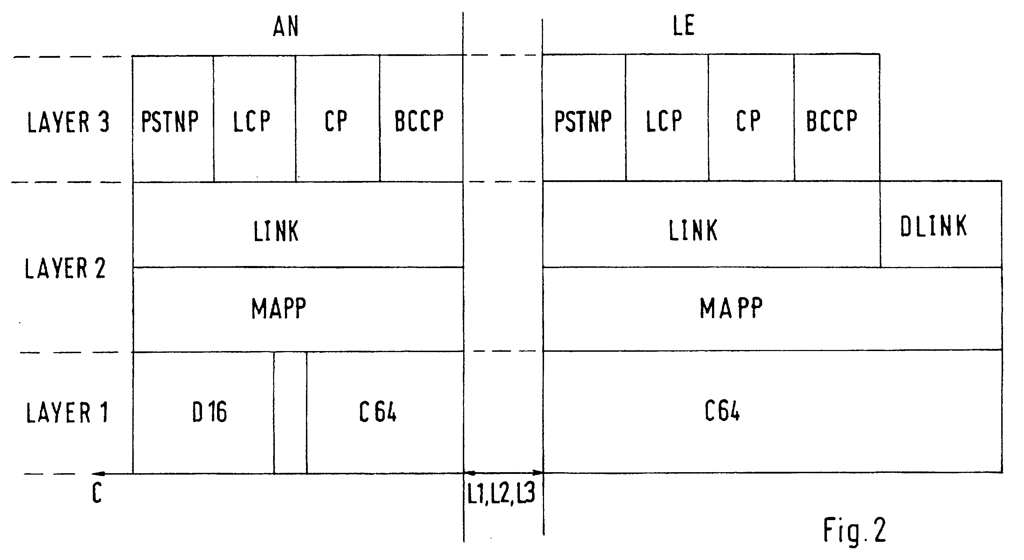

Im folgenden wird vor der detailierteren Beschreibung der Steuereinrichtung CONTR1 kurz der Nachrichtenaustausch zwischen den Steuereinrichtungen CONTR1 und CONTR2 anhand von Fig. 2 näher erläutert.

Fig. 2 zeigt die Kommunikations-Schichten Layer1 bis Layer3 für das Zugangsnetz AN und die Vermittlungsstelle LE.

Die Schichten LAYER3 bis LAYER1 weisen vier Protokolle PSTNP, LCP, CP und BCCP, drei Dienste LINK, DLINK und MAPP bzw. zwei physikalische Übertragungsstrecken D16 und C64 auf.

Die Schicht LAYER1 stellt die Bitübertragungsschicht dar. Sie wird zwischen dem Zugangsnetz AN und der Vermittlungsstelle LE durch die von den Steuerkanälen der Verbindungsleitungen L1 bis L3 bereitgestellten Übertragungsstrecken C64 gebildet, die jeweils über eine Übertragungsrate von 64 Kilobit/sec verfügen. Für die Verbindung zwischen dem ISDN-Endgerät C und dem Zugangsnetz AN wird die Kommunikations-Schicht LAYER1 von der entsprechenden Schicht des ISDN-D-Kanals als Übertragungstrecke D16 bereitgestellt.

Mittels der vier Protokolle PSTNP bis BCCP der Kommunikations-Schicht LAYER3 steuert die Vermittlungsstelle LE die Funktionen im Zugangsnetz AN. Jedes dieser Protokolle ist hierbei für die Erfüllung einer ganz speziellen Steuerungsaufgabe bestimmt und verfügt hierzu über einen speziellen Nachrichtensatz. Jede Nachricht eines solchen Nachrichtensatzes enthält eine protollspezifische Kennung, die sie eindeutig einem der Protokolle PSTNP bis BCCP zuordnet.

Es ist auch möglich, daß für die Protokolle PSTNP bis CP andere oder daß weitere Protokolle vorgesehen sind. Beispielsweise kann zusätzlich zu den Protokollen PSTNP bis BCCP ein Protokoll vorgesehen sein, mittels dem beim Ausfall einer der Verbindungsleitungen L1 bis L3 die Aufrechterhaltung der dadurch betroffenen Verbindungen oder Steuerkanäle gesteuert wird.

Die Schicht LAYER2 ist die Sicherungs-Schicht und stellt zum einen den Protokollen PSTNP bis BCCP den Dienst LINK zur gesicherten Übertragung von Nachrichten zur Verfügung. Zum anderen überträgt sie die Daten vom D-Kanal des Endgerätes C transparent und gesichert zur Vermittlungsstelle LE, wo sie sie über den Dienst DLINK der Schicht LAYER3 zur Verfügung stellt. Hierfür bedient sie sich des Dienstes MAPP, der diese beiden Nachrichtenströme zu einem einzigen Nachrichtenstrom vereinigt und nach der Übertragung wieder in zwei Nachrichtenströme teilt.

Im folgenden wird nun die Steuereinrichtung CONTR1 anhand von Fig. 1 näher erläutert:

Die Steuereinrichtung CONTR1 weist fünf Bearbeitungseinrichtungen BCCC, PSTNC, CC, LCC und DLLC auf.

Die Bearbeitungseinrichtung DLLC tauscht Nachrichten mit den Bearbeitungseinrichtungen BCCC bis LCC, mit der Schnittstelleneinrichtungen INTER1 und und mit der Teilnehmeranschluß-Einrichtung UP3 aus. Die Bearbeitungseinrichtung BCCC sendet Steuerdaten an das Koppelnetz NET1. Die Bearbeitungseinrichtung PSTNC tauscht Daten mit den Teilnehmeranschluß-Einrichtungen UP1 und UP2 aus. Die Bearbeitungseinrichtung CC tauscht Daten mit den Schnittstelleneinrichtungen UP1 bis UP3 aus. Die Bearbeitungseinrichtung LCC tauscht Daten mit der Schnittstelleneinrichtung INTER1 aus.

Jede der Bearbeitungseinrichtungen BCCC bis LCC erfüllt eine spezielle Aufgabe und tauscht hierfür gemäß eines speziellen Protokolls der Kommunikationsschicht LAYER3, nämlich gemäß des Protokolls BCCP, PSTNP, CCP, bzw. LCCP Nachrichten mit der Steuereinrichtung CONTR2 aus. Die Bearbeitungseinrichtung DLLC stellt die gesicherte Übertragung dieser Nachrichten und der ISDN-D-Kanal-Signalisierungs-Nachrichten vom Endgerät C zur Steuereinrichtung CONTR2 auf der Sicherungs-Schicht LAYER2 bereit und teilt die von der Steuereinrichtung CONTR2 ankommenden Nachrichten den Bearbeitungseinrichtungen BCCC, PSTNC, CC oder LCC oder dem ISDN-D-Kanal des Endgrätes C zu.

Die Bearbeitungseinrichtungen CC und LCC steuern und überwachen die Teilnehmeranschlußeinrichtungen UP1 bis UP3 bzw. die Schnittstelleneinrichtung INTER1. Die Bearbeitungseinrichtung PSTNC steuert die analoge Teilnehmersignalisierung der Teilnehmeranschluß-Einrichtungen UP1 und UP2.

Die Bearbeitungseinrichtung BCCC steuert den Aufbau von Verbindungen durch das Koppelnetz NET1. Die entsprechenden Anweisungen, welche Verbindungen sie aufzubauen hat, erhält sie hierbei von der Vermittlungstell LE. Das für diese Kommunikation verwendete Protokoll BCCP ist primär ein Protokoll, das der dynamischen Zuteilung der Nutzkanäle der Verbindungsleitungen L1 bis L3 zu den einzelnen Endgeräten A bis C dient. Desweiteren sind in diesem Protokoll zusätzliche Nachrichten vorgesehen, mittels denen auch Internverbindungen zwischen den Endgeräten A bis C durch das Koppelnetz NET1 geschaltet werden können.

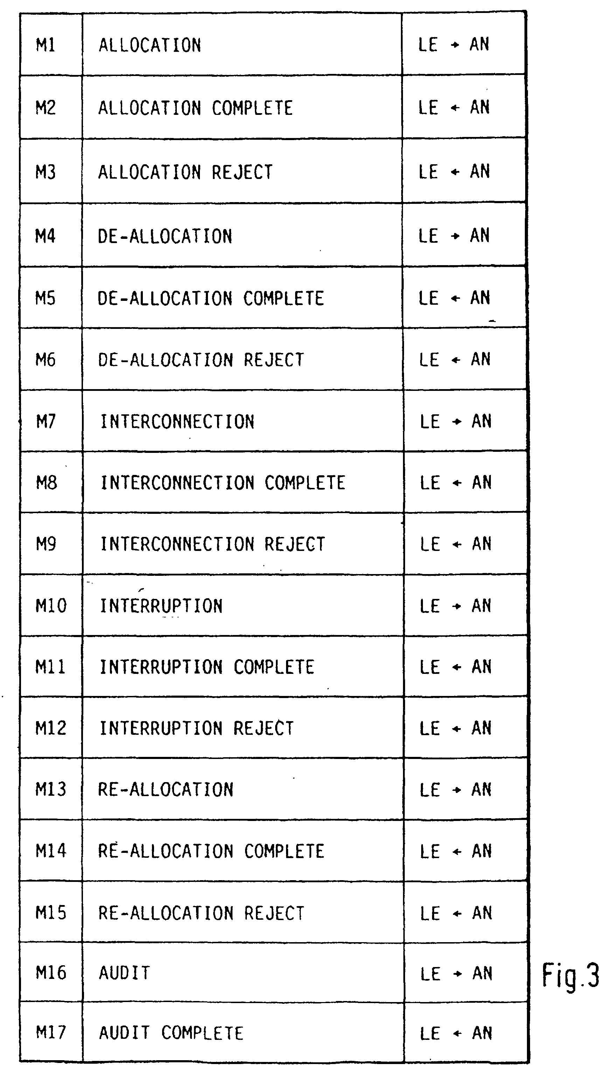

Der dem Protokoll BCCP zugrunde liegende Nachrichtensatz wird nun anhand von Fig. 3 näher erläutert.

Fig. 3 zeigt einen Satz von 17 Nachrichten M1 bis M17, die dem Protokoll BCCP zugrunde liegen. Jedem der Nachrichten M1 bis M17 ist hierbei in Fig. 3 ihre Bezeichnung und die Richtung zugeordnet, in der sie gesendet werden.

Die Nachricht M1 wird von der Vermittlungstelle LE an das Zugangsnetz AN gesendet und teilt einem der Endgeräte A bis C einen Nutzkanal auf einer der Verbindungsleitungen L1 bis L3 zu. Die Nachricht M1 enthält neben einer Kennung für das Protokoll BCCP eine für diese Nachricht spezifische Kennung sowie eine Kennung für das bestimmte Endgerät und den bestimmten Nutzkanal.

Hat die Steuereinrichtung CONTR1 die angeforderte Verbindung erfolgreich durch das Koppelnetz NET1 durchgeschaltet, so sendet sie die Nachricht M2 an die Vermittlungsstelle LE. War es ihr dagegen nicht möglich, so sendet sie die Nachricht M3. Die Nachrichten M2 und M3 enthalten jeweils neben einer Kennung für das Protokoll BCCP eine nachrichtenspezifische Kennung und die Nachricht M3 enthält noch zusätzlich eine Kennung, die den Grund der Ablehnung beschreibt.

Die Nachrichten M4 bis M6 entsprechen jeweils den Nachrichten M1, M2 bzw. M3. Sie dienen dazu, die durch die Nachrichten M1 bis M3 über einen bestimmten Nutzkanal aufgebaute Verbindung wieder abzubauen.

Die Nachricht M7 wird von der Vermittlungsstelle LE an das Zugangsnetz AN gesendet und fordert die Bearbeitungseinrichtung BCCC auf, zwischen zweien der Endgeräte A bis B eine Internverbindung durch das Koppelnetz NET1 zu schalten. Sie enthält neben den sie spezifizierenden Kennungen die Kennungen der bestimmten Endgeräte.

Es ist auch möglich, eine Internverbindung zwischen mehr als zwei Endgräten aufzubauen, wie dies beispielsweise bei einer Konferenzschaltung der Fall ist.

Die Nachrichten M8 und M9 werden von der Bearbeitungseinrichtung BCCC an die Vermittlungsstelle LE gesendet, um den Aufbau einer angeforderten Internverbindung zu bestätigen, bzw. die Nichtausführung dieser Anforderung anzuzeigen. Sie sind entsprechend den Nachrichten M2 bzw. M3 aufgebaut.

Die Nachrichten M10 bis M12 entsprechen den Nachrichten M7, M8 bzw. M9, und dienen dazu, eine durch die Nachrichten M7 bis M9 aufgebaute Internverbindung wieder abzubauen.

Die Nachricht M13 wird von der Vermittlungsstelle LE an die Bearbeitungseinrichtung BBCC gesendet und fordert diese auf, eine zwischen Endgeräten der Endgeräte A bis C bestehende Internverbindung durch das Koppelnetz NET1 abzubauen und für jedes dieser Endgeräte eine Verbindung über einen bestimmten der Nutzkanäle der Verbindungsleitungen L1 bis L3 zur Vermittlungsstelle LE aufzubauen. Die Nachricht M13 enthält neben der Protokoll- und der Nachrichten-Kennungen die Kennungen derjenigen Endgeräte, zwischen denen diese Internverbindung besteht sowie die Kennungen der ausgewählten Nutzkanäle der Verbindungsleitungen L1 bis L3.

Die Nachrichten M14 und M15 werden von der Bearbeitungseinrichtung BCCC an die Vermittlungsstelle LE gesendet, um die Durchführung der Anforderung durch die Nachricht M13 zu bestätigen bzw. deren Nichtausführung anzuzeigen. Sie sind entsprechend den Nachrichten M2 bzw. M3 aufgebaut.

Die Nachricht M16 wird von der Vermittlungstelle LE an das Zugangsnetz AN gesendet. Das Zugangsnetz AN wird mittels dieser Nachricht aufgefordert, den Zustand einer in der Nachricht M16 spezifizierten Internverbindung an die Vermittlungsstelle mittels der Nachricht M17 zu melden. Die Nachrichten M16 und M17 enthalten so neben der Protokoll- und der Nachrichten-Kennung die Spezifizierung einer oder mehrerer Internverbindungen bzw. Daten über den Zustand einer oder mehrerer Internverbindungen.

Es ist auch möglich, daß der dem Protokoll BCCP zugrunde liegende Nachrichtensatz noch weitere Nachrichten enthält.

Weiter ist es möglich, auf die Nachrichten M13 bis M17 zu verzichten. Die Nachrichten M13 bis M15 dienen hauptsächlich zur Erhöhung der Geschwindigkeit, wenn ein Zusatzdienst während des Bestehens einer Internverbindung angefordert wird, der eine Nutzkanal-Verbindung zur Vermittlungsstelle LE erfordert. Eine weitere Verwendung dieser Nachrichten, insbesondere beim Abbau einer Internverbindung, ist möglich.

Fordert eines der Endgeräte A bis C einen solchen Zusatzdienst an, beispielsweise Konferenzschaltung, Gespräch weiterschalten (call hold) oder Anklopfen bei einem analogen Endgerät (call waiting), so wird dies der Steuereinrichtung CONTR2 durch die Bearbeitungseinrichtung PSTNC mittels des Protokolls PSTNP oder über einen transparent übertragenen ISDN-D-Kanal gemeldet. Diese sendet sodann die Nachricht M13 an die Steuereinrichtung CONTR1, wodurch die Internverbindung aufgelöst und durch zwei Verbindungen zur Vermittlungsstelle LE ersetztz wird. Nun ist es der Steuereinrichtung CONTR2 möglich, eine dem angeforderten Zusatzdienst entsprechende Verbindung über das Koppelnetz NET2 zu schalten, also beispielsweise eine Verbindung zu einem Tastwahlempfänger der Vermittlungsstelle LE aufzubauen.

Im folgenden wird eine Möglichkeit den Verbindungsaufbau zwischen zwei Endgeräten des Zugangsnetzes AN zu realisieren anhand des Verbindungsaufbaus zwischen den Endgeräten A und B beispielhaft erläutert:

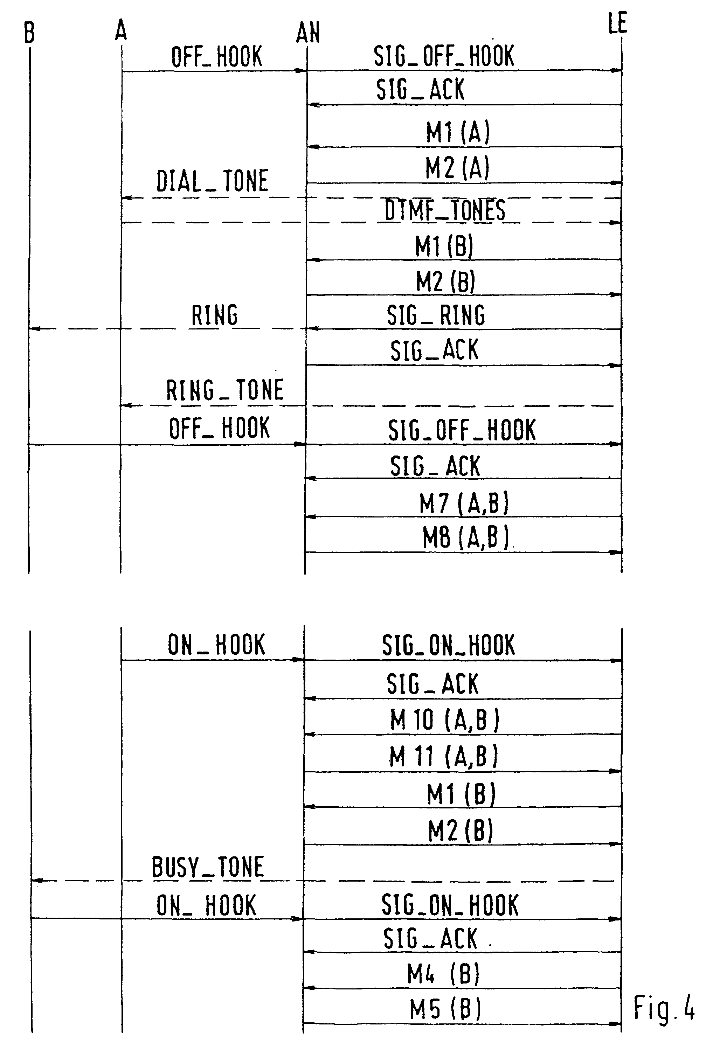

Fig. 4 zeigt den Nachrichtenaustausch zwischen den Endgeräten A und B, dem Zugangsnetz AN und der Vermittlungsstelle LE für den Verbindungsaufbau. Das Senden einer Nachricht wird hierbei jeweils durch einen entsprechenden Pfeil repäsentiert.

Der Teilnehmer beim Endgerät A hebt ab und eine entsprechendes Ereignis OFF_HOOK wird von der Teilnehmeranschluß-Einrichtung UP1 des Zugangsnetzes AN detektiert. Diese leitet die Information an die Bearbeitungseinrichtung PSTNC weiter, die daraufhin eine Nachricht SIG_OFF_HOOK an die Vermittlungsstelle LE sendet. Diese bestätigt den Empfang der Nachricht mit einer Nachricht SIG_ACK.

Weiter bestimmt die Vermittlungsstelle LE einen freien Nutzkanal und sendet an das Zugangsnetz AN eine Nachricht M1(A), mit der sie sie auffordert, eine Verbindung zwischen dem Nutzkanal und der Teilnehmeranschluß-Einrichtung UP1 aufzubauen. Die Durchführung des Verbindungsaufbaus bestätigt das Zugangsnetz AN mit einer Nachricht M2(A).

Nach Empfang der Nachricht M2(A) verbindet die Vermittlungsstelle LE das Endgerät A mit einer der Einrichtungen PU1 bis PU3, die einen Generator zur Erzeugung des Wähltones sowie eine Einrichtung zur Auswertung der Frequenzwahl-Information enthält. Ein Wählton DIAL_TONE wird sodann von dieser Einrichtung an das Endgerät A gesendet und die von dem Teilnehmer eingegebenen Frequenzwahl-Informationen DTMF_TONES werden von dieser Einrichtung ausgewertet.

Es ist auch möglich, daß das Endgerät A das Impulswahlverfahren benutzt. In diesem Fall werden die Impulswahl-Informationen in der Bearbeitungseinrichtung PSTNC ausgewertet und mittels entsprechender Nachrichten an die Vermittlungsstelle LE gesendet.

Der Teilnehmer am Endgerät A wählt das Endgerät B an. Dieses wird von der Vermittlungsstelle LE als zum selben Zugangsnetz AN gehörend erkannt. Sie sendet sodann an das Zugangsnetz AN eine Nachricht M1(B), mit der sie es auffordert, eine Verbindung zwischen ihr und dem Endgerät B über einen von ihr bestimmten Nutzkanal aufzubauen. Der Empfang dieser Nachricht wird vom Zugangsnetz AN mit einer Nachricht M2(B) bestätigt. Weiter sendet sie an die Bearbeitungseinrichtung PSTNC eine Nachricht SIG_RING, worauf diese das Senden eines Rufsignals RING an das Endgerät B durch das Anlegen des Rufstromes durch die Teilnehmeranschluß-Einrichtung UP2 veranlaßt. Das erfolgreiche Senden des Rufsignals RING wird von der Bearbeitungseinrichtung PSTNC durch die Nachricht SIG_ACK bestätigt. Anschließend sendet die Vermittlungsstelle einen Rufton RING_TONE über den Nutzkanal an das Endgerät A.

Hebt der Teilnehmer beim Endgerät B ab, so detektiert die Teilnehmeranschluß-Einrichtung UP2 das Ereignis OFF_HOOK und stellt daraufhin automatisch das Senden des Signals RING an das Endgerät B ein. Das Auftreten dieses Signals wird der VermittlungsstelLe LE durch die Nachricht SIG_OFF_HOOK mitgeteilt, worauf diese den Empfang durch die Nachricht SIG_ACK bestätigt. Weiter stoppt die Vermittlungsstelle LE das Senden des Ruftones RING_TONE an das Endgerät A und sendet an die Bearbeitungseinrichtung BCCC eine Nachricht M7(A,B), worauf diese eine Internverbindung zwischen den Endgeräten A und B aufbaut. Dies wird mit einer Nachricht M8(A,B) bestätigt.

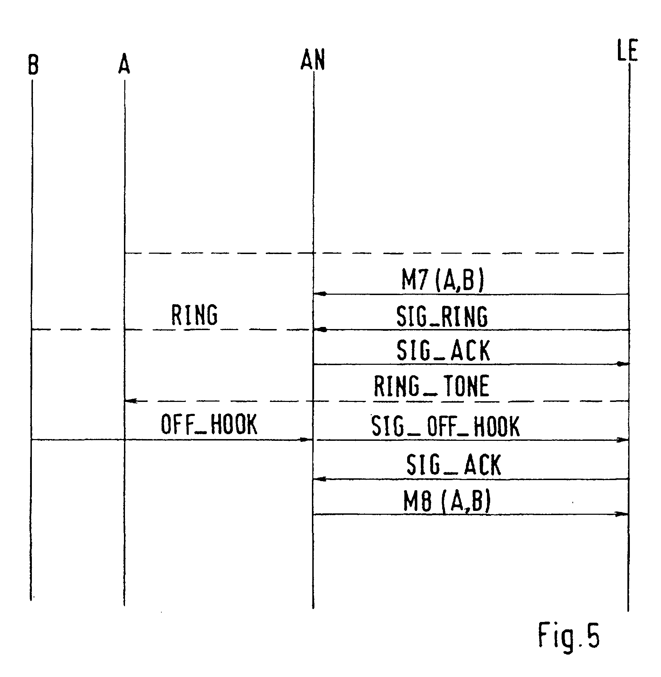

Es ist auch möglich, daß die Vermittlungsstelle LE die Nachricht M7(A,B) an das Zugangsnetz AN sendet, sobald sie erkennt, daß eine Verbindung zwischen den Endgeräten A und B aufgebaut werden soll. Diese mögliche Alternative wird nun kurz anhand von Fig. 5 erläutert:

Nach dem Empfang der Wahlinformatinen DTMF_TONES wird von der Vermittlungstelle LE festgestellt, daß eine Internverbindung zwischen den Endgräten A und B aufgebaut werden soll. Es wird sodann die Nachricht M7(A,B) an das Zugangsnetz gesendet. Diese wartet jedoch mit dem Aufbau der Internverbindung, bis sie das Abheben des Teilnehmers am Endgerät B durch Detektion der Ereignisses OFF_HOOK erkennt. Dazwischen erfolgt wie nach Fig. 4 das Senden des Rufsignals RING an das Endgerät B sowie das Senden des Ruftones RING_TONE an das Endgerät A. Erst wenn das Abheben des Teilnehmers am Endgerät B erkannt wird, wird dann vom Zugangsnetz AN die Internverbindung aufgebaut und sodann deren Aufbau der Vermittlungstelle LE durch die Nachricht M8(A,B) bestätigt.

Dieser Ablauf erfordert etwas mehr Steueraufwand im Zugangsnetz AN, kommt dagegen jedoch mit weniger Nachrichten aus und ist somit etwas schneller.

Wenn der Teilnehmer beim Endgerät A nach dem Gespräch auflegt, so detektiert das Zugangsnetz AN von dem Endgerät A ein Ereignis ON_HOOK. Dies meldet sie der Vermittlungsstelle LE mittels einer Nachricht SIG_ON_HOOK. Die Vermittlungsstelle LE bestätigt diese Nachricht mit der Nachricht SIG_ACK und sendet die Nachricht M10(A,B) an das Zugangsnetz AN, das daraufhin die Internverbindung zwischen den Endgeräten A und B unterbricht und dies mit der Nachricht M11(A,B) bestätigt. Als nächstes sendet die Vermittlungsstelle LE die Nachricht M1(B) an das Zugangsnetz AN, das daraufhin eine Verbindung zwischen dem Endgerät B und der Vermittlungsstelle LE über einen von der Vermittlungsstelle LE bestimmten Nutzkanal aufbaut. Den Aufbau der Verbindung bestätigt das Zugangsnetz AN mit der Nachricht M2(B) und die Vermittlungsstelle LE legt daraufhin einen Tongenerator an den Nutzkanal, der einen Besetzton BUSY_TONE über diese Verbindung an das Endgerät B sendet.

Empfängt das Zugangsnetz AN von dem Endgerät B das Signal ON_HOOK, so leitet sie dies mittels der Nachricht SIG_ON_HOCK an die Vermittlungsstelle LE weiter, die den Empfang mit der Nachricht SIG ACK bestätigt und die Nachricht M4(B) an das Zugangsnetz AN zurücksendet. Dieses baut sodann die Verbindung zwischen dem Endgerät B und der Vermittlungsstelle LE ab und bestätigt dies mit der Nachricht M5(B).

Es ist auch möglich, daß die Bestätigung mittels der Nachricht SIG ACK seltener erfolgt und daß die Ausführung mehrer Anweisungen durch nur eine Nachricht SIG_ACK bestätigt wird.

## Patentansprüche

1. Verfahren zum Steuern eines Zugangsnetzes (AN) mit einer Vielzahl von Teilnehmeranschlüssen durch eine mit diesem über eine Schnittstelle verbundene Vermittlungsstelle (LE), bei dem die Vermittlungsstelle (LE) und das Zugangsnetz(AN) über eine Vielzahl von Nutzkanälen Nutzdaten und über mindestens einen Steuerkanal verschiedenen Protokollen (PSTNP, LCP, CP, BCCP) zugeordnete Nachrichten austauschen, wobei jedes der Protokolle (PSTNP, LCP, CP, BCCP) jeweils von einem Satz von Nachrichten zur Erfüllung einer speziellen Aufgabe gebildet wird und die Zugehörigkeit einer Nachricht zu einem der Protokolle (PSTNP, LCP, CP, BCCP) als Bestandteil der Nachricht in die Nachricht eingetragen wird, bei dem die Vermittlungsstelle (LE) und das Zugangsnetz (AN) über einen der Steuerkanäle Nachrichten gemäß eines der Protokolle (BCCP) austauschen, das dem dynamischen Zuteilen von Nutzkanälen zu Teilnehmeranschlüssen dient und bei dem mittels dieser Nachrichten das Schalten von Verbindungen zwischen Teilnehmeranschlüssen und der Vermittlungsstelle (LE) über einen bestimmten Nutzkanal von der Vermittlungsstelle (LE) gesteuert wird, **dadurch gekennzeichnet, daß** in dem Protokoll (BCCP) zum dynamischen Zuteilen von Nutzkanälen weitere Nachrichten (M7 bis M15) zum Auf- und Abbau von Verbindungen zwischen Teilnehmern des selben Zugangsnetzes (AN), im folgenden Internverbindungen genannt, verwendet werden und daß der Auf- und Abbau solcher Internverbindungen von der Vermittlungsstelle (LE) mittels dieses so erweiterten Protokolls (BCCP) gesteuert wird.

2. Verfahren nach Anspruch 1, **dadurch gekennzeichnet, daß** die Vermittlungsstelle (LE) an das Zugangsnetz (AN) gemäß dem erweiterten Protokoll (BCCP) eine erste oder eine zweite weitere Nachricht (M7; M10) sendet, bei deren Empfang das Zugangsnetz (AN) eine Verbindung zwischen den in der Nachricht (M7; M10) spezifizierten Teilnehmeranschlüssen des selben Zugangsnetzes (AN) aufbaut bzw. abbaut.

3. Verfahren nach Anspruch 1, **dadurch gekennzeichnet, daß** die Vermittlungsstelle (LE) an das Zugangsnetz (AN) gemäß dem erweiterten Protokoll (BCCP) eine dritte weitere Nachricht (M13) sendet, bei deren Empfang das Zugangsnetz (AN) eine Verbindung zwischen den in der Nachricht (M13) spezifizierten Teilnehmeranschlüssen abbaut und anschließend Verbindungen zwischen der Vermittlungsstelle (LE) und diesen Teilnehmeranschlüssen über in dieser Nachricht (M13) spezifizierte Nutzkanäle aufbaut.

4. Verfahren nach Anspruch 2, **dadurch gekennzeichnet, daß** die Vermittlungsstelle (LE) die erste weitere Nachricht (M7) an das Zugangsnetz (AN) sendet, wenn sie den rufenden und den gerufenen Teilnehmer als zum selben Zugangsnetz (AN) gehörend identifiziert hat und ihr das Zugangsnetz (AN) meldet, daß der gerufene Teilnehmer sich gemeldet hat.

5. Verfahren nach Anspruch 2, **dadurch gekennzeichnet, daß** die Vermittlungsstelle die erste weitere Nachricht (M7) an das Zugangsnetz (AN) sendet, wenn sie den rufenden und den gerufenen Teilnehmer als zum selben Zugangsnetz (AN) gehörend identifiziert hat und daß das Zugangsnetz (AN) nach Empfang der ersten Nachricht (M7) die Verbindung erst aufbaut, wenn sie erkennt, daß der gerufene Teilnehmer abhebt.

6. Verfahren nach Anspruch 2, **dadurch gekennzeichnet, daß** die Vermittlungsstelle (LE) die zweite weitere Nachricht (M10) an das Zugangsnetz (AN) sendet, wenn ihr das Zugangsnetz (AN) das Beenden der Verbindung durch einen Teilnehmer meldet und sie diesem Teilnehmer eine Internverbindung zugeordnet hat.

7. Verfahren nach Anspruch 3, **dadurch gekennzeichnet, daß** die Vermittlungsstelle (LE) die dritte Nachricht (M13) an das Zugangsnetz (AN) sendet, wenn ein Teilnehmer einer Internverbindung einen Zusatzdienst anfordert, der einen oder mehrere Nutzkanäle zur Vermittlungsstelle (LE) benötigt.

8. Vermittlungsstelle (LE), die mit einer Schnittstelleneinrichtung (INTER2) zum Austausch von Nutzdaten über eine Vielzahl von Nutzkanälen sowie von Nachrichten über mindestens einen Steuerkanal mit einem Zugangsnetz (AN), und mit einer Steuereinrichtung (CONTR2) zum Fernsteuern des Zugangsnetzes (AN) versehen ist, die so ausgestaltet ist, daß sie über die Schnittstelleneinrichtung (INTER2) verschiedenen Protokollen (PSTNP, LCP, CP, BCCP) zugeordnete Nachrichten mit dem Zugangsnetz (AN) austauscht, wobei jedes der Protokolle (PSTNP, LCP, CP, BCCP) jeweils aus einem Satz von Nachrichten zur Erfüllung einer speziellen Aufgabe besteht und die Zugehörigkeit einer Nachricht zu einem der Protokolle (PSTNP, LCP, CP, BCCP) als Bestandteil der Nachricht in die Nachricht eingetragen ist, daß sie mit dem Zugangsnetz (AN) über einen der Steuerkanäle Nachrichten gemäß eines der Protokoll (BCCP) austauschen, das dem dynamischen Zuteilen von Nutzkanälen zu Teilnehmeranschlüssen dient und daß sie mittels dieser Nachrichten das Schalten von Verbindungen zwischen Teilnehmeranschlüssen des Zugangsnetzes (AN) und der Vermittlungsstelle (LE) über von ihr bestimmte Nutzkanäle steuert, **dadurch gekennzeichnet, daß** die Steuereinrichtung (CONTR2) so ausgestaltet ist, daß sie in dem Protokoll (BCCP) zum dynamischen Zuteilen von Nutzkanälen weitere Nachrichten (M7 bis M15) zum Auf- und Abbau von Verbindungen zwischen Teilnehmern des selben Zugangsnetzes (AN), im folgenden Internverbindungen genannt, verwendet und daß sie den Auf- und Abbau solcher Internverbindungen mittels dieses so erweiterten Protokolls (BCCP) steuert.

9. Zugangsnetz (AN) mit einer Vielzahl von Teilnehmeranschluß-Einrichtungen (UP1 bis UP3), mit einer Schnittstelleneinrichtung (INTER1) zum Austausch von Nutzdaten über eine Vielzahl von Nutzkanälen sowie von Nachrichten über mindestens einen Steuerkanal mit einer Vermittlungsstelle (LE), mit einem Koppelnetz (NET1) zum Schalten von Verbindungen zwischen den Teilnehmeranschluß-Einrichtungen (UP1 bis UP3) und den Nutzkanälen und mit einer Steuereinrichtung (CONTR1) zum Steuern des Zugangsnetzes (AN), die so ausgestaltet ist, daß sie über die Schnittstelleneinrichtung (INTER1) verschiedenen Protokollen (PSTNP, LCP, CP, BCCP) zugeordnete Nachrichten mit der Vermittlungsstelle (LE) austauscht, wobei jedes der Protokolle (PSTNP, LCP, CP, BCCP) jeweils aus einem Satz von Nachrichten zur Erfüllung einer speziellen Aufgabe besteht und die Zugehörigkeit einer Nachricht zu einem der Protokolle (PSTNP, LCP, CP, BCCP) als Bestandteil der Nachricht in die Nachricht eingetragen ist, daß sie mit dem Zugangsnetz (AN) über einen der Steuerkanäle Nachrichten gemäß eines der Protokolle (BCCP) austauschen, das dem dynamischen Zuteilen von Nutzkanälen zu Teilnehmeranschlüssen dient, und daß sie mittels dieser Nachrichten beim Schalten der Verbindungen durch das Koppelnetz (NET1) gesteuert wird, **dadurch gekennzeichnet daß** das Koppelnetz (NET1) so ausgestaltet ist, daß es auf Anforderung von der Steuereinrichtung (CONTR1) Verbindungen zwischen Teilnehmeranschluß-Einrichtungen (UP1 bis UP3) im selben Zugangsnetz, im folgenden Internverbindungen genannt, auf- und abbaut und daß die Steuereinrichtung (CONTR1) so ausgestaltet ist, daß sie in dem Protokoll (BCCP) zum dynamischen Zuteilen von Nutzkanälen die Verwendung weiterer Nachrichten (M7 bis M15) zum Auf- und Abbau von Internverbindungen zuläßt und beim Auf- und Abbau von Internverbindungen mittels dieses erweiterten Protokolls (BCCP) von der Vermittlungsstelle (LE) aus gesteuert wird.

## Claims

1. Method for controlling an access network (AN) with a multiplicity of user terminations through an exchange (LE) connected to the access network (AN) via an interface, in which the exchange (LE) and the access network (AN) exchange payload data via a multiplicity of payload channels and exchange messages, assigned to different protocols (PSTNP, LCP, CP, BCCP), via at least one control channel, each of the protocols (PSTNP, LCP, CP, BCCP) being respectively formed by a set of messages for the performance of a particular task and the association of a message with one of the protocols (PSTNP, LCP, CP, BCCP) being entered in the message as a constituent part of the message, in which the exchange (LE) and the access network (AN) exchange messages, via one of the control channels, according to one of the protocols (BCCP) which serves dynamically to allocate payload channels to user terminations, and in which the switching of connections between user terminations and the exchange (LE) via a designated payload channel is controlled by the exchange (LE) by means of these messages, **characterized in that**, in the protocol (BCCP) for the dynamic allocation of payload channels, further messages (M7 to M15) are used for the set-up and tear-down of connections between users of the same access network (AN), termed internal-connections in the following, and **in that** the set-up and tear-down of such internal connections is controlled by the exchange (LE) by means of this thus expanded protocol (BCCP).

2. Method according to Claim 1, **characterized in that** the exchange (LE) sends to the access network (AN), according to the expanded protocol (BCCP), a first or a second further message (M7; M10), upon the receipt of which the access network (AN) sets up or, respectively, tears down a connection between the user terminations of the same access network (AN) which are specified in the message (M7; M10).

3. Method according to Claim 1, **characterized in that** the exchange (LE) sends to the access network (AN), according to the expanded protocol (BCCP), a third further message (M13), upon the receipt of which the access network (AN) tears down a connection between the user terminations specified in the message (M13) and subsequently sets up connections between the exchange (LE) and these user terminations via payload channels specified in this message (M13).

4. Method according to Claim 2, **characterized in that** the exchange (LE) sends the first further message (M7) to the access network (AN) when it has identified the calling and the called user as belonging to the same access network (AN) and the access network (AN) signals to the exchange that the called user has answered.

5. Method according to Claim 2, **characterized in that** the exchange sends the first further message (M7) to the access network (AN) when it has identified the calling and the called user as belonging to the same access network (AN) and **in that** the access network (AN) only sets up the connection, following receipt of the first message (M7), when it detects lifting of the handset by the called user.

6. Method according to Claim 2, **characterized in that** the exchange (LE) sends the second further message (M10) to the access network (AN) when the access network (AN) signals to it the ending of the connection by a user and it has assigned an internal connection to this user.

7. Method according to Claim 3, **characterized in that** the exchange (LE) sends the third message (M13) to the access network (AN) when a user of an internal connection requests an additional service which requires one or more payload channels to the exchange (LE).

8. Exchange (LE) which is provided with an interface device (INTER2) for exchanging, with an access network (AN), payload data via a multiplicity of payload channels, and messages via at least one control channel, and is provided with a control device (CONTR2), for remote control of the access network (AN), which is of such design that it exchanges with the access network (AN), via the interface device (INTER2), messages assigned to different protocols (PSTNP, LCP, CP, BCCP), each of the protocols (PSTNP, LCP, CP, BCCP) respectively consisting of a set of messages for the performance of a particular task and the association of a message with one of the protocols (PSTNP, LCP, CP, BCCP) being entered in the message as a constituent part of the message, in that it exchanges messages with the access network (AN), via one of the control channels, according to one of the protocols (BCCP) which serves dynamically to allocate payload channels to user terminations and in that, by means of these messages, it controls the switching of connections between user terminations of the access network (AN) and the exchange (LE) via payload channels designated by it, **characterized in that** the control device (CONTR2) is of such design that, in the protocol (BCCP) for the dynamic allocation of payload channels, it uses further messages (M7 to M15) for the set-up and tear-down of connections between users of the same access network (AN), termed internal connections in the following, and **in that** it controls the set-up and tear-down of such internal connections by means of this thus expanded protocol (BCCP).

9. Access network (AN) with a multiplicity of user termination devices (UP1 to UP3), with an interface device (INTER1) for exchanging, with an exchange (LE), payload data via a multiplicity of payload channels, and messages via at least one control channel, with a coupling network (NET1) for switching connections between the user termination devices (UP1 to UP3) and the payload channels, and with a control device (CONTR1), for controlling the access network (AN), which is of such design that it exchanges with the exchange (LE), via the interface device (INTER1), messages assigned to different protocols (PSTNP, LCP, CP, BCCP), each of the protocols (PSTNP, LCP, CP, BCCP) respectively consisting of a set of messages for the performance of a particular task and the association of a message with one of the protocols (PSTNP, LCP, CP, BCCP) being entered in the message as a constituent part of the message, in that it exchanges messages with the access network (AN), via one of the control channels, according to one of the protocols (BCCP) which serves dynamically to allocate payload channels to user terminations, and in that it is controlled by means of these messages in the switching of the connections through the coupling network (NET1), **characterized in that** the coupling network (NET1) is of such design that, upon request from the control device (CONTR1), it sets up and tears down connections between user termination devices (UP1 to UP3) in the same access network, termed internal connections in the following, and **in that** the control device (CONTR1) is of such design that, in the protocol (BCCP) for the dynamic allocation of payload channels, it permits the use of further messages (M7 to M15) for the set-up and tear-down of internal connections and is controlled from the exchange (LE) in the set-up and tear-down of internal connections by means of this expanded protocol (BCCP).

## Revendications

1. Procédé pour commander un réseau d'accès (AN) avec une multitude de raccordements d'abonné par le biais d'un central local (LE) relié au réseau d'accès par une interface, avec lequel le central local (LE) et le réseau d'accès (AN) échangent des données utiles par le biais d'une multitude de canaux utiles et des messages associés à différents protocoles (PSTNP, LCP, CP, BCCP) par le biais d'au moins un canal de commande, moyennant quoi chacun des protocoles (PSTNP, LCP, CP, BCCP) est formé à chaque fois d'un ensemble de messages pour remplir une tâche spéciale et l'appartenance d'un message à un des protocoles (PSTNP, LCP, CP, BCCP) est inscrite dans le message en tant que partie intégrante du message, avec lequel le central local (LE) et le réseau d'accès (AN) échangent par le biais d'un des canaux de commande des messages selon un des protocoles (BCCP) qui sert à l'affectation dynamique de canaux utiles aux raccordements d'abonné et avec lequel est commandé au moyen de ces messages l'établissement de liaisons entre des raccordements d'abonné et le central local (LE) via un canal utile défini du central local (LE), **caractérisé en ce que** dans le protocole (BCCP) destiné à l'affectation dynamique de canaux utiles sont employés des messages supplémentaires (M7 à M15) afin d'établir et de supprimer des liaisons entre des abonnés du même réseau d'accès (AN), appelées par la suite liaisons internes, et **en ce que** l'établissement et la suppression de telles liaisons-internes sont commandés par le central local (LE) au moyen de ce protocole (BCCP) ainsi étendu.

2. Procédé selon la revendication 1, **caractérisé en ce que** le central local (LE) envoie au réseau d'accès (AN) selon le protocole (BCCP) étendu un premier ou un deuxième message supplémentaire (M7, M10) à la réception desquels le réseau d'accès (AN) établit ou supprime une liaison entre les raccordements d'abonné du même réseau d'accès (AN) spécifiés dans le message (M7, M10).

3. Procédé selon la revendication 1, **caractérisé en ce que** le central local (LE) envoie au réseau d'accès (AN) selon le protocole (BCCP) étendu un troisième message supplémentaire (M13) à la réception duquel le réseau d'accès (AN) supprime une liaison entre les raccordements d'abonné spécifiés dans le message (M13) et ensuite établit des liaisons entre le central local (LE) et ces raccordements d'abonné par le biais de canaux utiles spécifiés dans ce message (M13).

4. Procédé selon la revendication 2, **caractérisé en ce que** le central local (LE) envoie un premier message supplémentaire (M7) au réseau d'accès (AN) lorsqu'il a identifié que l'abonné appelé et l'abonné appelant appartiennent au même réseau d'accès (AN) et que le réseau d'accès (AN) lui signale que l'abonné appelé s'est signalé.

5. Procédé selon la revendication 2, **caractérisé en ce que** le central local envoie le premier message supplémentaire (M7) au réseau d'accès (AN) lorsqu'il a identifié que l'abonné appelé et l'abonné appelant appartiennent au même réseau d'accès (AN), et **en ce que** le réseau d'accès (AN) établit la liaison seulement après avoir reçu le premier message (M7) s'il détecte que l'abonné appelé a décroché le combiné.

6. Procédé selon la revendication 2, **caractérisé en ce que** le central local (LE) envoie le deuxième message supplémentaire (M10) au réseau d'accès (AN) lorsque le réseau d'accès (AN) lui signale la fin de la communication par un abonné et qu'il a affecté une liaison interne à cet abonné.

7. Procédé selon la revendication 3, **caractérisé en ce que** le central local (LE) envoie le troisième message (M13 au réseau d'accès (AN) lorsqu'un abonné demande au cours d'une liaison interne un service supplémentaire qui nécessite un ou plusieurs canaux utiles vers le central local (LE).

8. Central local (LE) qui est équipé d'une installation d'interface (INTER2) pour échanger avec un réseau d'accès (AN) des données utiles par le biais d'une multitude de canaux utiles ainsi que des messages par le biais d'au moins un canal de commande, et d'une installation de commande (CONTR2) pour commander à distance le réseau d'accès (AN), qui est équipé de manière qu'il échange avec le réseau d'accès (AN) des messages associés à différents protocoles (PSTNP, LCP, CP, BCCP) par le biais de l'installation d'interface (INTER2), moyennant quoi chacun des protocoles (PSTNP, LCP, CP, BCCP) se compose à chaque fois d'un ensemble de messages pour remplir une tâche spéciale et l'appartenance d'un message à l'un des protocoles (PSTNP, LCP, CP, BCCP) est inscrite dans le message en tant que partie intégrante du message, de manière qu'il échange avec le réseau d'accès (AN), par le biais d'un des canaux de commande, des messages selon un des protocoles (BCCP) qui sert à l'affectation dynamique de canaux utiles aux raccordements d'abonné, et de manière qu'il commande au moyen de ces messages l'établissement de liaisons entre des-raccordements d'abonné du réseau d'accès (AN) et le central local (LE) par le biais de canaux utiles qu'il a déterminés, **caractérisé en ce que** l'installation de commande (CONTR2) est équipée de manière qu'elle emploie dans le protocole (BCCP) pour l'affectation dynamique des canaux utiles des messages supplémentaires (M7 à M15) afin d'établir et de supprimer des liaisons entre des abonnés du même réseau d'accès (AN), appelées par la suite liaisons internes, et **en ce qu'**elle commande l'établissement et la suppression de telles liaisons internes au moyen de ce protocole (BCCP) ainsi étendu.

9. Réseau d'accès (AN) avec une multitude d'installations de raccordement d'abonné (UP1 à UP3), avec une installation d'interface (INTER1) destinée à échanger avec un central local (LE) des données utiles par le biais d'une multitude de canaux utiles ainsi que des informations par le biais d'au moins un canal de commande, avec un réseau de connexion (NET1 ) destiné à établir des liaisons entre les installations de raccordement d'abonné (UP1 à UP3) et les canaux utiles, et avec une installation de commande (CONTR1) destinée à commander le réseau d'accès (AN) qui est équipée de manière qu'elle échange avec le central local (LE), par le biais de l'installation d'interface (INTER1), des messages associés aux différents protocoles (PSTNP, LCP, CP, BCCP), moyennant quoi chacun des protocoles (PSTNP, LCP, CP, BCCP) se compose à chaque fois d'un ensemble de messages pour remplir une tâche spéciale et que l'appartenance d'un message à l'un des protocoles (PSTNP, LCP, CP, BCCP) est inscrite dans le message en tant que partie intégrante du message, de manière qu'elle échange avec le réseau d'accès (AN), par le biais d'un des canaux de commande des messages selon un des protocoles (BCCP) qui sert à l'affectation dynamique des canaux utiles aux raccordements d'abonné, et de manière qu'elle soit commandée au moyen de ces messages lors de l'établissement des liaisons à travers le réseau de connexion (NET1), **caractérisé en ce que** le réseau de connexion (NET1) est équipé de manière qu'il établisse et supprime sur l'ordre de l'installation de commande (CONTR1) des liaisons entre des installations de raccordement d'abonné (UP1 à UP3) dans le même réseau d'accès, par la suite appelées liaisons internes, et **en ce que** l'installation de commande (CONTR1) est équipée de manière qu'elle autorise dans le protocole (BCCP) pour l'affectation dynamique des canaux utiles l'utilisation de messages supplémentaires (M7 à M15) afin d'établir ou de supprimer des liaisons internes et que, lors de l'établissement et de la suppression des liaisons internes, elle soit commandée depuis le central local (LE) au moyen de ce protocole (BCCP) étendu.
